(19) Europäisches Patentamt
European Patent Office
Office européen des brevets

(11) EP 1 202 261 A1

(12) **EUROPEAN PATENT APPLICATION**

(43) Date of publication:
**02.05.2002 Bulletin 2002/18**

(51) Int Cl.[7]: **G11B 7/24**, B29C 47/88

(21) Application number: **00123082.0**

(22) Date of filing: **24.10.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **3M Innovative Properties Company**
**St. Paul, Minnesota 55133-3427 (US)**

(72) Inventor: **Schoeppel, Wolfgang**
**41470 Neuss (DE)**

(74) Representative: **Wilhelm, Stefan M. et al**
**Office of Intellectual Property Counsel,**
**c/o 3M Deutschland GmbH,**
**Carl-Schurz-Strasse 1**
**41453 Neuss (DE)**

(54) **Optical storage medium**

(57) Optical storage medium from which information can be read out and/or into which information can be recorded with a light beam (6), said optical storage medium comprising one or more base members (1) bearing on the side of the base members (1) on which the light beam (6) is incident, one or more information storage layers (3), at least one light-transmissive cover film (5) and one or more light-transmissive adhesive layers (4) bonding said cover films (5) to each other, to the surface (2) of the base members (1) on which the light beam (6) is incident and/or to one or more information storage layers (3), said cover films (5) being extruded and exhibiting a vertical birefringence of less than 0.001 at 20 °C at least at the wavelength or wavelength spectrum, respectively, of said light beam (6).

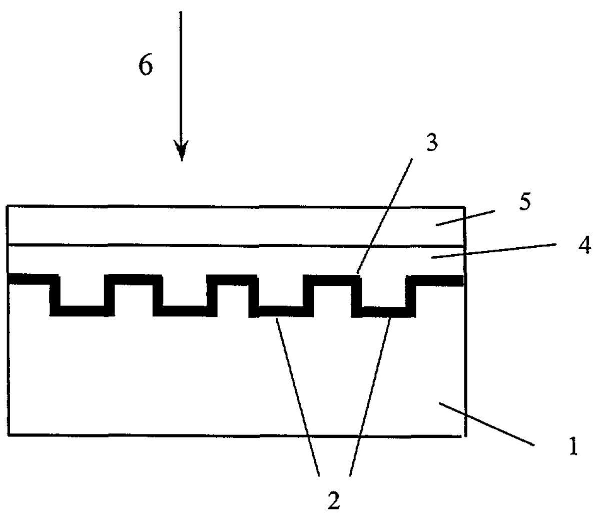


*Fig. 1a*

EP 1 202 261 A1

## Description

### Field of the invention

The present invention refers to an optical storage medium and, in particular, to a Digital Video Recordable disc (DVR) from which information can be read out and/or into which information can be recorded with a light beam, said optical storage medium comprising at least one base member bearing on the side of the base member on which the light beam is incident, one or more readable and/or recordable information storage layers and one or more light-transmissive cover films. The present invention furthermore refers to a method of manufacturing an optical storage medium and, in particular, to a Digital Video Recordable disc (DVR).

### Background of the invention

DVR discs exhibit a high storage capacity which renders them useful for digital recording and storage.

Typical constructions and formats of DVR discs are described, for example, in EP 0,729,141, EP 0,867,873 and EP 0,874,362.

DVR discs generally comprise a disc-shaped substrate or base member exhibiting on one or both major surfaces an information storage layer comprising a structure of lands and grooves. The DVR discs further comprise a light-transmissive cover film which is applied to the information storage layer.

It is disclosed in the co-pending patent application EP 99 107 975.7 filed by the present applicant on April 22, 1999, that the transmittance of optical storage media and, in particular, DVRs, with respect to linearly polarized light can be improved by using light-transmissive cover films being essentially optically isotropic and, more preferably, exhibiting a vertical birefringence of less than 0.001 in each case at least at 20 °C and at least at the wavelength or wavelength spectrum, respectively, of the impinging light beam. EP 99 107 975.7 discloses that light-transmissive cover films with low or very low values of the vertical birefringence can be obtained by casting processes including solvent-casting and polymerization-casting techniques whereas it is stated that extruded polymer layers can usually not be used as light-transmissive cover films in optical storage media such as DVRs.

Solvent casting techniques require, however, large amounts of solvents such as methylene chloride to dissolve the polymer of the light-transmissive cover film during the casting step. The solvent needs to be evaporated and recycled from the product which requires expensive equipment and high energy costs. Polymerization casting techniques require using of at least one release liner which is disadvantageous from an economical point of view.

It was therefore an object of the present invention to provide alternative methods of preparing light-transmissive cover films for use in optical storage media such as DVRs in addition to those disclosed in EP 99 107 975.7. It was another object of the present invention to provide optical storage media such as DVRs, comprising light-transmissive cover films obtained by such alternative methods.

Other objects of the present invention are apparent from the detailed specification enclosed.

### Brief description of the invention

The present invention relates to an optical storage medium from which information can be read out and/or into which information can be recorded with a light beam (6), said optical storage medium comprising one or more base members (1) bearing on the side of the base members (1) on which the light beam (6) is incident, one or more information storage layers (3), at least one light-transmissive cover film (5) and one or more light-transmissive adhesive layers (4) bonding said cover films (5) to each other, to the surface (2) of the base members (1) on which the light beam (6) is incident and/or to one or more information storage layers (3), said cover films (5) being extruded and exhibiting a vertical birefringence of less than 0.001 at 20 °C at least at the wavelength or wavelength spectrum, respectively, of said light beam (6).

The present invention furthermore relates to a preferred method of preparing an optical recording medium according to any of claims 1 - 10 comprising

(1) providing at least one base member (1) having a surface (2) on which the light beam (6) is incident, said surface optionally comprising a structure of pits bearing an information storage layer (3),

(2) providing a multilayer film (12) comprising in the order given a releasable protective film (7), a light-transmissive cover film (5) the inner surface of which optionally comprising a structure of pits bearing an information storage layer (3), a light-transmissive pressure-sensitive adhesive layer (4) and a release liner (8), optionally further comprising between the light-transmissive cover film (5) and the pressure-sensitive adhesive film one or more further light-transmissive cover films (5') bonded to each other by means of one or more further light-transmissive adhesive layers (4'), wherein said cover films (5, 5') exhibit a vertical birefringence of less than 0.001 at 20 °C at least at the

wavelength or wavelength spectrum, respectively, of said light beam (6) and wherein at least one of said cover films (5, 5') is extruded,

(3) removing said release liner (8) and

(4) laminating the multilayer film (12) to the surface (2) of the information storage layer (3) on the surface (2) of the base member (1).

The present invention furthermore refers to the use of one or more extruded light-transmissive cover films (5) in an optical storage medium, said cover films exhibiting a vertical birefringence of less than 0.001 at 20 °C and at least at the wavelength or wavelength spectrum, respectively, of a light beam (6) used to read information out of or into said optical storage medium, said optical storage medium comprising one or more base members (1) bearing on the side of the base members (1) on which the light beam (6) is incident, one or more information storage layers (3), at least one light-transmissive cover film (5) and one or more light-transmissive adhesive layers (4) bonding said cover films (5) to each other, to the surface (2) of the base members (1) on which the light beam (6) is incident and/or to one or more information storage layers (3).

Brief description of the figures

*Fig. 1a* schematically shows a specific embodiment of the optical recording media according to the present invention comprising a base member 1, the surface 2 of which where the light beam 6 is incident upon, comprises a structure of lands and grooves which forms part of an information storage layer 3, said optical storage medium further comprising an extruded light-transmissive cover film 5 bonded to the information storage layer 3 by means of a pressure-sensitive adhesive layer 4.

*Fig. 1b* schematically shows another specific embodiment of the optical recording media according to the present invention comprising a base member 1, the surface 2 of which comprises a structure of lands and grooves which forms part of a first information storage layer 3a, said optical storage medium further comprising an extruded light-transmissive cover film 5 onto which the light beam 6 is incident upon, the surface 9 of which comprises a structure of lands and grooves which forms part of a second information storage layer 3b which is bonded to the information storage layer 3a by means of a pressure-sensitive adhesive layer 4.

*Fig. 2* schematically shows the lamination of a first laminate comprising a releasable protective film 7 and an extruded light-transmissive cover film 5 to a second laminate comprising a light-transmissive pressure-sensitive adhesive layer 4 and a smooth release liner 8 between two rollers 50,51 so that the exposed surface of the pressure-sensitive adhesive layer 4 is adhered to the exposed surface of the extruded light-transmissive cover film 5.

*Fig. 3* schematically shows removal of the release liner 8 from a laminate comprising in the order given a releasable protective film 7, a light-transmissive extruded cover film 5 and a pressure-sensitive adhesive layer 4 by drawing the release liner over roller 52 providing a bondable laminate 12, attachment of such laminate to a vacuum plate holder 53 by means of air suction and subsequent die-cutting to provide a disc-shaped laminate having a center hole 10 and an outer circumference 11, the die-cutting tool not being shown but indicated only by arrows.

*Fig. 4* schematically shows a disc-shaped laminate comprising in the order given a releasable protective film 7, an extruded light-transmissive cover film 5 and an exposed light-transmissive pressure-sensitive adhesive layer 4, said laminate having a center hole 10 and an outer circumference 11 and being attached to the vacuum plate holder 53 by means of air suction.

*Fig. 5* schematically shows a vacuum bonding apparatus 60 having an upper vacuum chamber 56 and a bottom pressure chamber 58, a vacuum being applicable to the vacuum chamber by means of pump 55 and vacuum or normal or overpressure, respectively, is applicable to the bottom chamber by means of a pump 57 or an air valve, respectively, the upper chamber comprising a top plate 54 and a movable bottom plate 59 separating the upper chamber 56 and the bottom chamber 58 in combination with a flexible seal 61 , the bottom plate 59 comprising vacuum plate holder 53 bearing a die-cut laminate of releasable protective layer 7, extruded light-transmissive cover film 5 and pressure-sensitive adhesive layer 4, and the top plate 54 holding the base member 1 bearing the information storage layer 3.

It should be noted that the figures are schematic only and, in particular, not drawn to scale. In Fig. 1a the thickness of the base member 1 typically is up to one order of magnitude or more larger than the thickness of the extruded light-transmissive cover film 5 whereas the depth of the grooves is typically in the range of 5 to 50 nm and thus negligible in comparison to the thickness of the base member 1.

Detailed description of the invention

Above and below, the terms "film" and "layer" are used interchangeably and refer to articles having an extension in the x-y-plane which is large (i. e. at least, e. g., 3 times or more) with respect to its extension in z-direction (i.

e. with respect to its thickness).

The optical storage media of the present invention comprise at least one base member bearing on the side of the base on which the light is incident, one or more information storage layers which may be readable and/or recordable, at least one light-transmissive pressure-sensitive adhesive layer and at least one extruded light-transmissive cover film.

Fig. 1a shows as an example a schematic representation of a cross-sectional view of a specific embodiment of an optical storage medium according to the present invention comprising a base member 1 exhibiting on its major surface 2 on the side where the light 6 is incident upon, a structure of lands and grooves which forms part of the information storage layer 3. The information storage layer 3 bears the pressure-sensitive adhesive layer 4 the light-transmissive cover film 5 is bonded to.

More complex constructions of optical storage media which are useful in the present invention, are described, for example, in EP 0,867,873 which is incorporated herein by reference. The optical storage media may comprise, for example, two or more information storage layers 3 arranged above each other on one or two, respectively, major surfaces of the substrate. Fig. 1b schematically shows a construction comprising two information storage layers 3a, 3b applied to the inner surface 2 of the base member and the inner surface 9 of the light-transmissive cover film, respectively.

The base member 1 may be of any shape but preferably is a disc exhibiting a centre hole useful for centering the assembled optical storage medium in a recording or playing station. The disc or annulus shaped substrates preferably have an outer diameter of about 10 to about 360 mm and an inner diameter of the centre hole of about 5 to about 35 mm, and the thickness preferably is between 0.3 and 3.0 mm and especially preferably between 0.5 and 1.5 mm. The substrate preferably comprises polymeric materials such as, for example, acrylic resins, polycarbonates, epoxy resins, cyclic olefin copolymers and polyolefins. Especially preferred are hard plastics such as polymethylmethacrylates, polycarbonates or thermally stable polyester cocarbonates.

The substrate may comprise on one or both, respectively, of its major surfaces a structure comprising concave portions (or grooves) and convex portions (or lands) which are usually collectively referred to as pits. Typical dimensions of pits including a relation between the wavelength of the light, the refractive index of the light-transmissive cover film and the depth of a groove in order to minimize optical crosstalk between consecutive lands and grooves are disclosed, for example, in EP 0,874,362 or EP 0,867,873 which are incorporated herein by reference. The track pitch which is the distance between the centreline of adjacent physical tracks as measured in radial direction, typically is 0.64 μm or less, and more preferably 0.32 μm or less.

The structure of pits can be moulded into one or both, respectively, surfaces of the base member or members. This process, which is described in detail in EP 0,729,141, p. 4, lns. 14 - 46, usually comprises a master disc-forming step (as schematically shown in Fig. 4A - 4G of EP '141) and an injection moulding step (as schematically shown in Fig. 5A - 5B of EP '141); EP '141 is incorporated herein by reference. It is also possible, however, that a structure of pits is obtained in the extruded light-transmissive cover film by passing the extruded light-transmissive cover film which is heated to a temperature above its glass transition temperature between two rollers at least one of them exhibiting a patterned structure. This technique is shown schematically in Fig. 10 of EP 0,867,873 where the extruded light-transmissive cover film is passed between a roll and a stamper. The extruded light-transmissive cover film thus obtained can be bonded to the base member or to one or more other light-transmissive cover films optionally bearing a structure of pits, by means of a pressure-sensitive adhesive layer so that optical storage media having a multiplicity of information storage layers can be obtained.

The construction of the information storage layer 3 depends on whether it is to allow for read out and/or recording.

If the optical storing layer is of ROM type, the information storage layer 3 may comprise the structure of pits bearing a reflective film of Al, Au or the like with a thickness of typically between 20 - 60 nm which can be obtained, for example, by sputtering.

Recordable optical storage media may be of phase-change type or magneto-optical type. According to EP 0,867,873 phase-change type information storage layers may be obtained by successively forming on the structure of pits a reflective film such as an Al film, a GeSbTe film and an ZnS-SiO2 film. More complex phase-change type information storage layers are described, for example, in EP 0,874,362. Magneto-optical type information storage layers 3 comprise, for example, the structure of pits bearing a reflective film such as an Al film, a SiN film, a TbFeCo film and a SiN film in this order.

Information storage layers of write-once type can be obtained, for example, by applying a thin reflective film of Al, Au or other metals to the structure of pits which is then coated with a cyanin or phthalocyanine system organic pigment film.

The information storage layers described above are given by way of example only. The optical storage media according to the present invention can comprise other and/or modified constructions of information storage layers.

It is disclosed in co-pending EP 99 107 975.7 filed by the present applicant on April 22, 1999, that optical

storage media with a low thickness variation, advantageous optical properties and low jitter values can be obtained by bonding such media with one or more light-transmissive pressure-sensitive adhesive layers. In the co-pending European patent application entitled "Optical storage medium" filed by the present applicant with the European Patent Office on October 24, 2000, it is disclosed that optical storage media such as DVRs may also be bonded by applying a liquid curable precursor of the light-transmissive adhesive with subsequent curing. The use of pressure-sensitive adhesive layers or films is, however, preferred.

In the specific embodiment of the optical storage medium schematically shown in Fig.1a the adhesive layer 4 bonds the extruded light-transmissive cover film 5 to the information storage layer 3. In more complicated constructions comprising a multiplicity of information storage layers as was described above, adhesive layers 4 can also be used to bond two or more light-transmissive cover films 5 optionally comprising an information storage layer 3, to each other.

Another optical storage medium of the present invention comprises two or more information storage layers. In the specific embodiment of the optical storage medium schematically shown in Fig. 1b the adhesive layer 4 bonds a base member 1 bearing a first information storage layer 3a to a second information storage layer 3b on an extruded light-transmissive cover film 5 onto which the light beam 6 is incident upon.

The adhesive layer is required to be optically transparent or light-transmissive at the wavelength of the incident light beam 6 with which the information is read out from and/or recorded into the optical storage medium. Suitable light sources to generate light beam 6 comprise lasers having, for example, emission lines in the wavelength range of between 400 - 700 nm and preferably of between 600 - 660 nm for red lasers and 400 - 420 nm for blue lasers. It is also possible to use polychromatic light sources with appropriate monochromatic filters such as interference filters. The optical transparency or light-transmission of the adhesive used in the adhesive layer 4 at the wavelength of the incident light which can be measured, for example, according to ASTM D 1746, preferably is at least 80 % and more preferably at least 85 %.

In case one or more pressure-sensitive adhesive layers are used in the optical storage media of the present invention, such pressure-sensitive adhesive layer may comprise a transparent backing and/or carrier layer such as, for example, optionally surface-treated, amorphous polymer layers such as polyethylene terephthalate (PET), polycarbonate or polymethylmethacrylate (PMMA) layers carrying on each side an adhesive layer, but preferably it is a transfer film comprising no backing and/or carrier layer. In case of a transfer film, the pressure-sensitive adhesive layer preferably has an average thickness of between 10 - 100 μm, more preferably, of between 15 - 80 μm, and especially preferably of between 15 - 50 μm, whereas double-sided adhesive tapes comprising a backing and/or carrier layer, may have a thickness of between 30 μm and 100 μm, and more preferably of between 40 μm and 80 μm.

The optical transparency requirements are generally fulfilled by acrylate-based pressure-sensitive adhesives, but silicone-based pressure-sensitive adhesives, rubber resin-based pressure-sensitive adhesives, block copolymer-based adhesives, especially those comprising hydrogenated elastomers, or vinylether polymer-based pressure-sensitive adhesives can also be used. Any of these materials may be compounded with plasticizers and/or tackifiers to tailor their properties. Acrylate-based pressure-sensitive adhesives are preferred.

Acrylate-based pressure-sensitive adhesives which are useful in the present invention can be obtained by polymerization of precursors comprising one or more alkyl acrylates the alkyl groups of which have an average of 4 - 14 atoms. The term average of 4 - 14 atoms means that the average number of carbon (C) atoms of the alkyl acrylate compounds is between 4 - 14 and, in particular, between 4 - 12 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates used in the invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl acrylate, n-butyl acrylate, 2ethylhexyl acrylate, isononyl acrylate and dodecyl acrylate. The polymerizable precursor of the pressure-sensitive adhesive preferably contains up to 5 and, in particular, 1 - 4 alkyl acrylates. The average number of carbon atoms in the alkyl groups of the alkyl acrylates as defined above, preferably is between 4 - 12 and very particularly between 5 - 10. Blends of different alkyl acrylates may also be used.

The polymerizable precursor of the pressure-sensitive adhesive can furthermore contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than acrylic acid preferably is not too high and preferably does not exceed 25 wt. % with respect to the mass of the alkyl acrylate component.

The polymerizable precursor of the pressure-sensitive adhesive can furthermore contain one or more moderately polar and/or strongly polar monomers. Polarity (i.e., hydrogen-bonding ability) is frequently described by the

use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269- 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene. It was found, however, that when the inner surface of at least one of the members comprises a corrosive layer such as, for example, an Al reflective layer, the percentage of strongly polar monomers is preferably less than about 10 % by weight and, more preferably, less than about 5 % by weight with respect to the mass of the acrylate monomers. The pressure-sensitive adhesive should preferably be essentially free of acrylic acid in order to avoid severe damaging of the inner surface of the members by corrosion.

Acrylate-based pressure-sensitive adhesives which are useful in the present invention are described, for example, in US 4,181,752, US 4,418,120, WO 95/13,331 or in Handbook of Pressure-sensitive Adhesive Technology; D. Satas ed.; Second Edition, New York 1989, pp. 396- 491. These references are incorporated herein by reference.

The pressure-sensitive adhesive layers useful in the present invention may comprise further components such as, for example, polymer additives, thickening agents, tackifiers, chain transfer agents and other additives provided that they do not reduce the transparency of the pressure-sensitive adhesive or adversely affect the uniformity of the thickness of the pressure-sensitive adhesive layer to an undesirable and/or unacceptable degree. The amount of such additive preferably is not more than 5 wt. % and more preferably between 0 - 2 wt. % with respect to the mass of the pressure-sensitive adhesive.

Pressure-sensitive adhesives which are useful in the present invention preferably exhibit a storage modulus G' (measured at a temperature of 23° C and a frequency of 1 radian/second) of between $5x10^5$ to $2x10^6$ dyne/cm$^2$, more preferably of between $6x10^5$ to $1.5x10^6$ dyne/cm$^2$ and especially preferably of between $6.5x10^5$ to $9.5x10^5$ dyne/cm$^2$.

The pressure-sensitive adhesive layer or film can be prepared by coating the pressure-sensitive adhesive layer as an organic or aqueous solution or dispersion onto a release liner with subsequent evaporation of the solvent and optional curing, or as an essentially solvent-free, prepolymerized syrup with subsequent curing. The latter method is described in some detail, for example, in US 4,181,752 whereas coating of a solution or dispersion of the pressure-sensitive adhesive is described, for example, in Handbook of Pressure-sensitive Adhesive Technology; D. Satas ed.; Second Edition, New York 1989, pp. 767 - 868 (incorporated herein by reference). The exposed surface of the pressure-sensitive adhesive layer is usually protected with a second release liner prior to or after curing.

It was found by the present inventors that the thickness of the pressure-sensitive adhesive layer has to be carefully controlled in order to allow for the preparation of very uniform optical recording media. It was found that the variation of the thickness of the optical recording medium introduced by the pressure-sensitive adhesive layer, preferably is not more than about ± 3 μm and more preferably not more than about ± 2 μm as measured across an arbitrarily selected cross-section of the optical recording medium over its entire extension using the method of measurement described in the test section below.

A preferred method of preparing very flat, uniform precision caliper pressure-sensitive adhesive layers which fulfill these requirements, are described, for example, in WO 95/29,766 incorporated herein by reference. The method comprises coating of an essentially solvent-free, polymerizable, syrupy precursor of the pressure-sensitive adhesive through a die onto the surface of a substrate as the substrate moves relative to the die. The die includes a channel adapted to receive the precursor of the pressure-sensitive adhesive and an adjustable width slot in communication with said channel through which the precursor is passed.

The slot is formed between a substantially straight, sharp edge located on the downstream side of the substrate and a land located on the upstream side of the substrate. The die coating method and the precision coating die are described in more detail in WO 95/29,764 and WO 95/29,765 (incorporated herein by reference). This method can be used, for example, to coat essentially solvent-free, prepolymerized, syrupy precursors of acrylate-based pressure-sensitive adhesives onto a moving belt or a release liner with subsequent curing of the pressure-sensitive adhesive layer. The pressure-sensitive adhesive layer or film may be directly transferred after curing from the moving belt onto the inner surface of the first member of the optical recording medium, or it may be temporarily stored between release liners prior to application to the inner surface of the first member. When using a moving belt or a release liner with an essentially flat and smooth surface with a surface roughness $R_z$ as defined below of less than 2 μm, very homogenous pressure-sensitive adhesive layers with a thickness tolerance of ± 3 μm or less, preferably of about ± 2 μm or less can be obtained. These adhesive layers can be used for the preparation of very uniform optical recording media, and the thickness tolerance introduced by the pressure-sensitive adhesive layer into the optical recording medium is typically ± 3 μm or less.

The refractive index of the pressure-sensitive adhesive layer preferably is adapted to the average refractive

index of the light-transmissive cover film. The difference between the average refractive index of the light-transmissive cover film and the refractive index of the pressure-sensitive adhesive layer preferably is not more than 0.05 and more preferably less than 0.02. The refractive index of the pressure-sensitive adhesive at the wavelength of the impinging light beam (6) (or the average refractive index of the pressure-sensitive adhesive in the wavelength spectrum of the impinging light beam (6), respectively), which can be measured, for example, according to ASTM D 542, preferably is at least 1.45 and more preferably at least 1.49. It was found by the present inventors that acrylate-based pressure-sensitive adhesive layers with a refractive index of at least about 1.50 which are useful in the present invention, can be obtained by including a sufficient amount of, for example, phenoxy ethyl acrylate into the polymerizable precursor.

In case the optical storage medium of the present invention comprises one or more adhesive layers obtained by applying a liquid curable precursor of the light-transmissive adhesive e. g. onto the information storage layer 3 of the base member 1 with subsequent application of the light-transmissive cover film 5 and curing of the precursor, such precursor of the light-transmissive adhesive is preferably cured by exposing it to irradiation such as ultraviolet light (UV), gamma (γ) or e-beam irradiation, for example. The precursor of the light-transmissive adhesive contains at least one or more irradiation-curable compounds and one or more polymerization initiators.

Suitable irradiation-curable compounds include monomers, oligomers and prepolymers having a double bond becoming reactive upon irradiation with, for example, an e-beam or UV light. Irradiation-curable compounds comprising at least one acrylic group

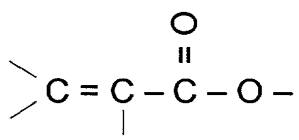

are preferred. Particularly preferred are irradiation-curable compounds comprising at least one (meth) acryloyl group

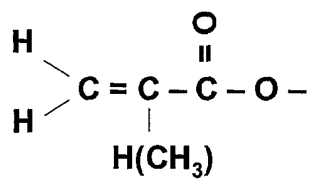

The irradiation-curable compounds suitable in the present invention are especially preferably selected from a group of compounds comprising optionally hydroxyl-, carboxyl- or carboxylate-modified alkyl or alkoxy acrylates, urethane acrylates, epoxy acrylates and acrylamides.

Especially preferred are furthermore irradiation-curable compounds comprising at least one N-vinyl group. Preferred N-vinyl containing irradiation-curable monomers which are suitable in the present invention include, for example, N-vinyl caprolactam, N-vinyl pyrrolidone and N-vinyl imidazole.

The polymerization initiator(s) suitable in the present invention include any conventional polymerization initiators which generate a radical upon UV, γ or e-beam irradiation. Exemplary polymerization initiators include benzoin ether-photoinitiators such as benzoin isopropylether and benzoin isobuthylether; benzophenone photoinitiators such as benzophenone, p-methoxybenzophenone, and p-bromobenzo-phenone; acetophenone photoinitiators such as benzyl-methylketal, 2,2-diethoxyacetophenone, and 1,1-dichloroacephenone; thioxanthone photoinitiators such as 2-chlorothioxanthone; quinone photoinitiators such as anthoraquinone and phenanthoraquinone; and sulfide photoinitiators such as benzylsulphide, and tetramethylsulfide; and substituted alphaketols such as 2-methyl-2-hydroxypropiophenone. Examples of commercially available photoinitiators include Irgacure 819 and Darocur 1173 (both available from Ciba-Geigy Corp., Hawthorne, NY, USA), Lucern TPO (available from BASF, Parsipanny, NJ, USA) and Irgacure 651, whch is available from Ciba-Geigy Corporation and is believed to be 2,2-dimethoxy-1,2-diphenylethane-1-one. Also useful are copolymeric photoinitiators.

The thickness of the cured light-transmissive adhesive layer obtained by applying a liquid curable precursor of said adhesive with subsequent curing, is typically from 0.5 - 20 μm, more preferably from 2 - 10 μm and especially preferably from 2 - 8 μm. The variation of the thickness of the optical storage medium introduced by such cured adhesive layer typically is not more than about ± 2 μm and more preferably not more than about ±1 μm.

Further details on adhesive layers obtained by applying a liquid curable precursor of the light-transmissive adhesive layer can be taken from European patent application entitled "Optical storage medium" filed by the present

applicant at the European patent office on October 24, 2000.

The optical storage media of the present invention comprise one or more light-transmissive cover films which each optionally exhibit on one or both of their major surfaces a structure of pits. It is disclosed in co-pending European patent application EP 99 107 957.7, that optical storage media with a reproducably high transmittance in particular with respect to linearly polarized light can be obtained by using in such storage media one or more light-transmissive cover films being essentially optically isotropic and preferably having a vertical birefringence of less than 0.001, more preferably of less than $8 \times 10^{-4}$ and especially preferably of less than $6.5 \times 10^{-4}$ at a temperature of 20 °C and at least at the wavelength or wavelength spectrum, respectively, of the light beam 6 used for recording and/or reading out information.

For a given sheet of a polymeric film having a plane extending in x- and y-directions and a thickness d in the z-direction, the vertical birefringence is the difference between the refractive index perpendicular to the plane of the film, e.g. in the z-direction, and the average of the refractive indices in the two principal directions parallel to the plane of the film, e. g., the plane containing the x- and y-directions. The vertical birefringence is measured applying the method of measurement as described below, at a temperature of 20 °C preferably using a laser light source which can also be used for recording and/or reading out, respectively, information into and from, respectively, the optical storage media. Laser light sources which can be used include, for example, those having emission lines in the wavelength range of between 400 - 700 nm. It is also possible to use polychromatic light sources using a monochromatic filter.

It was surprisingly found by the present inventor that light-transmissive cover films which are useful in the present invention and exhibit, in particular, a low vertical birefringence of less than 0.001 at a temperature of 20 °C and at least of the wavelength or wavelength spectrum, respectively, of the impinging light beam can be obtained by using extrusion methods.

Suitable extrudable polymers preferably exhibit a melt flow rate at 300 °C as measured according to ISO 1133 using a weight of 1.2 kg, of between 40 - 200 g/10 min. and more preferably of 50 - 150 g/10 min. Specific examples include, for example, polycarbonates and polyolefin-based polymers such as, for example, polydicyclopentadiene. It is disclosed in WO 00/09,591 that polycarbonate molecules having a low molecular weight Mw of between about 15,000 and about 20,000 which are typically recommended for injection applications, can preferably used for preparing polycarbonate films having a low value of in-plane birefringence.

The extrudable polymer is molten and extruded using, in particular, the so-called chill-roll extrusion method which is described in detail in "Handbuch der Kunststoff-Extrusionstechnik, vol. II, Extrusionsanlagen", edited by F. Hensen et al., Hanser-Verlag Munich, 1986, pp. 164 - 171, section 6.5.2.7. "Chill-Roll-Abzugsanlagen", which is incorporated herein by reference. It was surprisingly found by the present inventor that this technique allows for the preparation of polymer films having advantageous values of the vertical birefringence and, in particular, a vertical birefringence of less than 0.001 at a temperature of 20 °C and at least of the wavelength or wavelength spectrum, respectively, of the impinging light beam. It is disclosed in WO 00/09,591 that the chill-roll extrusion technique allows for the extrusion of low molecular weight polycarbonate films having low values of in-plane birefringence. The person skilled in the art would have expected, however, disadvantageous values for the vertical birefringence because of the stress introduced into the polycarbonate in z-direction due to the presence of a chilled metal roll on one side of the film and of ambient atmosphere on the other side of the film.

It was found by the present inventor that the vertical birefringence of extruded polymer films obtained by the chill-roll method, can be decreased by using chilled rolls on which the polymer is formed, having a large diameter of preferably at least 0.6 m, more preferably of at least 0.8 m and especially preferably of at least 1.0 m. It is assumed by the present inventor who does, however, not wish to be bound by such theory, that the introduction of stress into the z-direction of the extruded polymer film which occurs when releasing such film from the chilled roll or rolls, respectively, can be decreased by using large diameter chill rolls. In an especially preferred method the chill roll or rolls are replaced by one or more chilled belts.

It was furthermore found by the present inventor that the polymer is preferably extruded solvent-free and/or free of monomers and/or outgassable low-molecular weight ingredients. If a solution of the polymer and/or a polymerizable precursor of the polymer is required initially, a vented extruder is preferably used so that the concentration of the solvent and/or the outgassable low-molecular weight ingredients in the polymer at the die of the extruder preferably is less than 1 wt.%, more preferably less than 0.5 wt.% and especially preferably less than 0.1 wt.% with respect to the mass of the polymer. It is assumed by the present inventor that the presence of higher amounts of the solvent tends to introduce strain and hence optical anisotropy and/or strain into the z-direction of the light transmissive polymeric film which is due to the gradient of the solvent in the z-direction during the evaporation of the solvent.

The light-transmissive cover film or films, respectively, used in the optical storage media of the present invention preferably furthermore exhibit an in-plane retardation of less than ± 30 nm, more preferably of less than ± 25 nm and especially preferably of less than ± 15 nm at a temperature of 20 °C and the wavelength or wavelength spectrum, respectively, of the light beam used for recording and/or reading out information. The in-plane retardation is measured applying the method of measurement as described below using DVD tester "Prometheus MT 136" commercially available from Dr. Schenk GmbH, Martinsried, Germany. The in-plane birefringence is obtained from the in-plane retardation value by dividing the latter by the thickness of the light-transmissive cover film.

The light-transmissive cover film obtained by polymerization of the polymerizable. precursor preferably is stiff or ductile. As used herein, the term "stiff' means stretch resistant, creep resistant and dimensionally stable. More particularly, the light-transmissive cover film preferably has a tensile modulus at room temperature of more than 1,380 MPa (200 kilopounds per square inch), more preferably of more than 2,070 MPa (300 kpsi) and most preferably of more than 2,760 MPa (400 kpsi).

Tensile modulus of the light-transmissive cover film is determined according to ASTM Test Method D-822-88 using a 10.2 cm (4 inch) gauge length and a separation rate of 5.1 cm/min (2 inches/min).

As used herein, the term "ductile light-transmissive cover film" refers to films having a tensile modulus of less than 1,380 MPa (=200 kpsi) and a tensile elongation at room temperature of greater than 50%, preferably greater than 150%. Tensile modulus and tensile elongation are measured in accordance with ASTM Test Method D-882-88 using a gauge length of 10.2 cm and a separation rate of 12.7 cm/min (5 inches/min). "Tensile elongation" as used herein refers to the elongation at break of the ductile material as measured during the referenced tensile test procedure.

Light-transmissive cover films with the specified values of stiffness or ductility, respectively, are preferred. The tensile test procedures described above are only used, however, to check the mechanical properties of test samples of the light-transmissive cover film. Such test samples are not used in the optical storage media of the present invention. The light-transmissive cover film to be used in the optical storage media of the present invention has to be handled as stress-free as possible in order not to impart optical anisotropy to such film. Therefore, the light-transmissive cover film useful in the present invention should not be subjected to stretching.

The thickness of the light-transmissive cover film or films, respectively, preferably is between 10 and 200 μm, more preferably between 20 and 150 μm and especially preferably between 40 and 120 μm. In more complicated constructions of the optical storage medium of the present invention comprising two or more light-transmissive cover films, the thickness of each cover layer preferaby is between 5 and 100 μm and more preferably between 10 and 90 μm.

The maximum thickness of the sum of the thicknesses of the light-transmissive cover film or films and the pressure-sensitive adhesive layer or layers of the optical storage media of the present invention can be estimated according to EP 0,867,873 and JP 3-225,650 by using a relationship established in JP 3-225,650 for CDs, between such maximum thickness, the numerical aperture of the optical head device of the optical disc recording and/or reproducing apparatus, the wavelength of the light source utilized and the skew margin. When using a laser light source with a wavelength of approximately 0.65 μm, EP 0,867,873 suggests for the sum of the thicknesses of the light-transmissive cover film or films and the pressure-sensitive adhesive layer or layers a value of 288 μm or less whereas for a blue light laser with a wavelength of 0.4 μm a value of 177 μm or less is disclosed.

The thickness of the extruded light transmissive cover film is preferably carefully controlled in order to allow for the preparation of very uniform light-transmissive cover films. It was found that the variation of the thickness of the light-transmissive cover film preferably is not more than ± 3 μm and more preferably not more than ± 2 μm as measured across an arbitrarily selected cross-section of the optical recording medium over its entire extension using the method of measurement described in the test section below.

It was found that the preparation of very flat, uniform precision caliper light-transmissive cover films can preferably be performed by using the die disclosed in WO 95/29,764 and WO 95/29,765 cited above for use in precision die coating applications, in chill-roll extruding of low molecular weight polycarbonates having a molecular weight Mw of, for example, from about 15,000 to about 20,000. Such polycarbonates exhibit a relatively high melt flow rate at 300 °C as measured according to ISO 1133 using a weight of 1.2 kg, of about 80 g/10 min. so that the above precision die can be used.

It was furthermore found by the present inventor that the speed of the chill roll or rolls, respectively, need to be carefully controlled in order to minimize thickness variations in the machine direction. Thickness variation in cross direction can be reduced by in-process scanning of the thickness of the extruded film in cross direction by adjusting gauge variations of the die in cross direction based on such data.

The temperature of the chill roll or rolls preferably are at least 10 °C and more preferably at least 15 °C in order to avoid condensation of ambient moisture. The temperature needs to be carefully controlled with a precision of at least ± 1 °C and more preferably of at least ± 0.5 °C which can and be achieved by cooling the rolls. Details can be found in Hanser et al., loc. cit.

For optical storage media according to the present invention a low value of the vertical birefringence is essential because of the large value of the numerical aperture of the focussed impinging light beam (6). The optical storage media of the present invention furthermore preferably exhibit a low value of in-plane retardation or of the in-plane birefringence, respectively. Light-transmissive cover films obtained by extrusion techniques and, in particular, by the chill-roll extrusion technique, preferably exhibit a value of the in-plane retardation of less than ± 30 nm, more preferably of less than ± 25 nm and especially preferably of less than ±15 nm at 20 °C at least at the wavelength or the wavelength spectrum, respectively, of the incident light beam 6; these values correspond for a typical value of the

light-transmissive cover film of, for example, 75 micron to values of the in-plane birefringence of 0.0004, 0.00033 and 0.0002, respectively.

Based on these findings, light-transmissive cover films which are essentially optically isotropic and, in particular, exhibit the required value of the vertical birefringence of less than 0.001 and, optionally, the required value of the in-plane birefringence of less than ± 30 nm in each case at 20°C and at least at the wavelength or wavelength spectrum, respectively, of the incident light beam 6, can reproducably be obtained by extrusion methods. Extruded light-transmissive polymer films with the required low values of vertical birefringence and, optionally, in-plane retardation are also available commercially as can be taken from the Example section below.

It was found that it is desirable to laminate a releasable protective film to at least one major surface of the light-transmissive cover film in order to protect the surface of the light-transmissive cover film during handling and mounting of the optical recording media.

A wide variety of polymer films optionally bearing a pressure-sensitive adhesive layer can be used as releasable protective film. Useful polymer films which can be used in conjunction with a pressure-sensitive adhesive layer comprise, for example, polyolefin films including homopolymers such as polyethylene or polypropylene films, copolymers such as ethylene/propylene copolymers and mixtures of homopolymers or copolymers such as mixtures of polyethylene and polypropylene, polyethylene terephthalate films or polyurethane films like, for example, extendable elastomeric polyurethanes of the polyetherurethane or polyesterurethane type. It is also possible to use laminates of at least two polymer films the lower exposed film of which being bonded to the extruded light-transmissive cover film 5, exhibiting self-adhering properties. Suitable examples of polymers with self-adhering properties included EVA films (polyethylene-vinylacetate) having a high vinyl acetate content of, for example about 5 - 20 wt. % with respect to the mass of the EVA polymer. Such laminates can be used as releasable protective films without a pressure-sensitive adhesive layer.

The pressure-sensitive adhesive optionally used with the releasable protective film, if present is preferably selected so that it can be easily removed from the light-transmissive cover film without leaving behind any residual adhesive. It was found by the present inventors that the pressure-sensitive adhesive is preferably selected so that the 90° peel adhesion from a polycarbonate substrate as measured according to PSTC method PSTC-3 is not more than 1 N/2.54 cm, preferably not more than 75 cN/2.54 cm and especially preferably less than 50 cN/2.54 cm. Suitable acrylate based removable adhesives which exhibit a low peel adhesion strength and a high cohesive strength which are useful for the preparation of releasable protective films are described, for example, in US 4,166,152 incorporated herein by reference. Releasable protective films which are useful in the present invention are available as protective tape products from 3M; a suitable example is 3M Protective Tape # 2104.

In a preferred method of preparing an optical recording medium according to Fig. 1a, a first laminate comprising a releasable protective film 7 and an extruded light-transmissive cover film 5 is laminated to a second laminate comprising a pressure-sensitive adhesive layer 4 and a smooth release liner 8, between two rolls 50,51 as is schematically shown in Fig. 2. The rolls exhibit a very smooth surface and are arranged to allow for an essentially stress-free and bubble-free lamination of the films.

The resulting laminate is fed into a bonding station schematically shown in Fig. 3 which is operated in a quasi-continuous mode. The release liner 8 is separated from the resulting laminate, for example, by means of a dispensing edge or roll 52 and then attached to a vacuum plate holder 53 by air suction. Using appropriate die-cut equipment (not shown) the die-cut laminate schematically shown in Fig. 4 exhibiting the center hole 10 and the outer circumference 11 corresponding to the dimensions of the disc-shaped base member 1, is obtained. The vacuum plate holder 53 with the attached die-cut laminate is then transferred to a vacuum bonding apparatus 60 schematically shown in Fig. 5. The vacuum bonding apparatus comprises an upper vacuum chamber 56 and a bottom pressure chamber 58 which are separated by the movable bottom plate 59 and the flexible seal 61. The upper chamber 56 can be evacuated by means of pump 55, and the bottom chamber 58 can be evacuated or pressurized, respectively, by means of pump 57. The vacuum plate holder 53 is attached to the bottom plate 59 of the vacuum bonding apparatus 60 with the exposed adhesive layer 4 of the attached die-cut laminate facing up. The base member 1 bearing the information storage layer 3 is attached to the top plate 54 of the vacuum bonding apparatus 60 with the information storage layer 3 facing down. The bottom chamber 58 is evacuated in order to keep the bottom plate 59 in a lower position during the following evacuation of the main chamber 56. The main chamber 56 of the vacuum bonding apparatus 60 is then evacuated via pump 55.The pressure in the bottom chamber 58 is then increased to a certain level via pump 57 thereby pushing the die-cut laminate against the base member 1. Then the bottom plate 59 is driven to the lower position by evacuating the bottom pressure chamber 58. After pressurizing the main chamber 56 of the vacuum bonding apparatus 60 to atmospheric pressure, the optical storage medium according to Fig. 1a of the present invention can be removed from the vacuum bonding apparatus 60. The releasable protective film 7 is removed to give a specific embodiment of an optical storage medium according to the present invention according to Fig. 1a.

In an alternative method of preparing an optical recording medium according to Fig. 1a, the pressure-sensitive adhesive layer 4 is laminated to the information storage layer 3 formed on the pits exhibiting surface 2 of the base

member 1. The pressure-sensitive adhesive layer can be supplied, for example, as die-cut having the shape of the base member. The pressure-sensitive adhesive layer is preferably attached near one edge of the base member and then progressively laminated across the surface of the base member, applying a lamination angle of, for example, 45° or less in order to avoid entrapment of air bubbles. The release liner is removed from the pressure-sensitive adhesive layer and the base member bearing the pressure-sensitive adhesive layer can be attached to bottom plate 59 of the vacuum bonding apparatus 60 of Fig. 5. A laminate comprising a releasable protective film and an extruded light-transmissive cover film is applied to the top plate. The optical recording medium is then prepared by pressurizing the bottom chamber 58 thereby pushing the bottom plate 59 to the top plate 54 as was described above.

In another method of preparing an optical recording medium according to Fig. 1a, a laminate comprising a releasable protective film 8, an extruded light-transmissive cover film 5 and an exposed pressure-sensitive adhesive layer 4 is bonded to the exposed surface of the information storage layer 3 of the disc-shaped base member 1 by means of a wheel-bonding device disclosed in WO 99/54,116 (incorporated herein by reference). The wheel-bonding process ensures a bonding almost free of air inclusions as well as a good flatness of the laminated optical storage media.

The method as described above is only exemplary and restricts by no means the scope of the present invention.

Test methods

*Thickness and flatness measurement*

The thickness and thickness variation of the light-transmissive cover films and PSA layers were measured using a DVD tester commercially available as ETA-DVD 80 from STEAG HamaTech AG, Sternenfeld, Germany. The ETA-DVD tester had a maximum resolution in radial direction of 0.1 mm and in tangential direction of 0.1 mm, the thickness resolution is 0.1 µm within the range of 25 - 120 µm. The ETA-DVD tester consists of a turntable onto which the disc is mounted, a laser/sensor system and the measuring computer unit.

Samples of the light-transmissive cover films to be evaluated were mounted with double-coated adhesive tape over cut-out sections of a CD disc blank which acted as a sample holder. Measurements were made at a radius of 37.5 mm from the disc center. Three hundred (300) values per circle were measured. This reflects the maximum resolution which could be measured using this instrument.

Samples of adhesive layers were evaluated as components of completed disc constructions.

*Vertical birefringence of light-transmissive cover film*

Equipment used:

Microscope:

A Leitz Ortholux II Pol microscope purchased from Ernst Leitz Wetzlar GmbH, Wetzlar, Germany (now Leica Mikroskopie und Systeme GmbH, Wetzlar, Germany), was used. This microscope was equipped with a 40X/0.85NA strain free objective and a full-wave compensating plate. The microscope was also equipped with a Bertrand lens for conoscopic viewing.

Polarization Analyzer:

RPA2000 Polarization Analyzer equipped with the RW or rotating waveplate option and a 435 nm interference filter. The instrument is manufactured by Instrument Systems GmbH, Neumarkter Str. 83, 81673 Munich, Germany

Procedure of measurement:

The procedure consists of 3 distinct steps:

1) determination of the orientation of the minimum and maximum refractive index directions in the plane of the light-transmissive cover film.
2) measurement of the Mueller matrix for light propagating through the light-transmissive cover film along a path 45 degrees to the plane of light-transmissive cover film.
3) calculation of the vertical birefringence from the Mueller matrix .

ad 1)

A sample of the light-transmissive cover film is placed on the microscope stage and brought into good focus using the 40X objective. By using conoscopic viewing it is verified that the light-transmissive cover film has 3 principal refractive indices: 2 very nearly equal refractive indices which are perpendicular to one another but in the plane of the film and a third refractive index perpendicular to the plane of the film. This can be confirmed by observing that the interference figure remains centered as the stage is rotated. If the interference figure remains well centered then the directions of the principal refractive indices in the plane of the film are determined.

ad 2)

The RPA2000 Polarization Analyzer is set up so that the plane of the rotating table is perpendicular to the light path between the polarization state generator and the polarization state analyzer. The sample of the light-transmissive cover film is placed on a holder that was constructed to ensure that the light beam used to analyze the film passes through the film at 45 degrees to the plane of the light-transmissive cover film. Additionally, the high refractive index direction in the plane of the light-transmissive cover film is oriented to be perpendicular to the light beam. The sample holder is then placed on the rotating table of the RPA2000 Polarization Anaylzer. The Mueller matrix is then measured for the film in this specific orientation. If the non-diagonal elements of the matrix are significantly different from zero then the table is rotated to minimize these terms and the Mueller matrix is re-measured.

ad 3)

The retardation of the light as it travels through the light-transmissive cover film at 45 degrees is calculated based on the equations given in "Polarized Light: fundamentals and applications", Edward Collet, M. Dekker, New York 1993, p. 581. Then the path length of the light through the light-transmissive cover film is obtained from the following equation:

$$\text{Path length} = \text{thickness of the film} / (\cos(\arcsin(45/\text{ nominal refractive index})))$$

using the average in-plane refractive index as the nominal refractive index.

The birefringence at 45 degrees is the retardation at 45 degrees divided by the path length. Because the in-plane refractive index is known, the refractive index at 45 degrees can be calculated.

The final calculation uses the equation for the length of a radial line in an ellipse to calculate the refractive index perpendicular to the plane of the film. The long axis of the ellipse is the refractive index in the plane of the film and the length of the radial line at 45 degrees is the refractive index calculated above. This allows the calculation of the unknown short axis of the ellipse or the refractive index perpendicular to the plane of the film.

The vertical birefringence is obtained as the difference between the in-plane refractive index and the refractive index perpendicular to the plane of the light-transmissive cover film.

The values of vertical birefringence were measured at 20 °C and at a wavelength of 435 nm.

*In-plane retardation of light-transmissive cover film*

Sample preparation: samples of the light-transmissive cover films to be evaluated were mounted with double-coated adhesive tape over cut-out sections of a CD disc blank which acted as a sample holder.

Measurements were made on commercial equipment suited to evaluating properties of optical recording media, available from Dr. Schenk GmbH, Martinsried, Germany, as Model "Prometheus MT 136". The measurement mode "relative birefringence" was selected.

A graph was generated giving relative birefringence (T) in nm (Y-axis) vs. measurement angle in degrees (X-axis). The resulting graph showed sections where the instrument was observing the sample holder. These portions were disregarded. The remaining signal appeared in shapes varying from near flat to a sinusoidal wave form.

Two measurements were made in each sample section, as 35 mm and 40 mm radius from the center of the disc, respectively. Another measurement was made at 64 mm which corresponds to a position outside the area of the disc where only air was observed. This served as a reference or control number.

The minimum and maximum values from the curve were taken and then averaged. Both the average and the deviation from that average are recorded.

Because the disc rotates, information is generated on the light-transmissive cover film's properties in several directions. One can observe the cross-web and down-web directions of the light-transmissive cover films and the influence on the birefringence.

A graph was generated showing thickness in microns vs. angle. The instrument calculates a minimum, a maximum, an average and a variation. These calculated values could not be utilized in a few instances because of periodic interference from the sample holder. In these cases values were taken from the curves manually.

*Micro-roughness and wave-like roughness of the light-transmissive cover film*

Samples of the light-transmissive cover films were held in a circular film-tensioning device designed to hold the film flat during measurement. Micro-roughness was then measured on the surface of the light-transmissive cover films using a UBM Laser Profilometer Mikrofocus Compact available from UBM Messtechnik GmbH, Ettlingen, Germany.

A distance of 10 mm of film surface was evaluated with 1000 data points per mm for a total of 10,000 data points. A graph was generated showing roughness in microns vs. distance over the 10 mm range (0 - 10 mm). The micro-roughness was estimated visually by measuring the width of the generated line. A wave-like function could be observed over a distance of several mm as well. The difference between the trough and the crest of a wave was measured and recorded.

Examples

*Example 1*

A low molecular weight polycarbonate polymer was extruded in a chill roll process to a thickness of 80 µ. The film can be obtained commercially as EUROPLEX ™ Film Clear 99506 from Roehm GmbH, Darmstadt, Germany.

Properties of the film were measured according to the test methods given above and are summarized in Table 1.

Surprisingly, the vertical birefringence of the extruded polycarbonate film of Example 1 was not only roughly comparable to the cast polycarbonate film of Comparative Example 1, it was actually lower or improved.

The extruded polycarbonate light-transmissive cover film was then used as a component in a cover sheet for a DVR by the following process:

The light-transmissive cover film was laminated to a releasable protective film designed to protect the light-transmissive cover film from scratches and contamination with dust during subsequent manufacture of optically readable discs. The releasable protective film was a multilayer polyolefin-based sheet, having a thickness of 50 microns, available as GH- X 173 from Bischof and Klein GmbH, Lengerich, Germany. Lamination was performed using a film laminator at 23° C.

A 25 micron thick layer of acrylic pressure-sensitive adhesive between two 50 micron thick siliconized polyester release liners was obtained commercially as Optically Clear Adhesive 8141 from 3M Company, St. Paul, MN/ USA. Circular sections of adhesive were cut out in circles having a diameter of ca. 120 mm.

The circular adhesive sections were supported on a continuous strip of liner from the bottom. Each circular adhesive section was protected by a same-sized-circular section of liner from above. Each circular adhesive /liner section had a centered hole of 15 mm.

The following process was used to bond a base member bearing an information storing layer on its surface, and the light-transmissive cover film bearing the releasable protective film as prepared above. The bonding apparatus, schematically shown in Fig. 5, was located in a clean room class 100 environment. Introduction of the DVR components into the apparatus of Fig. 5 and bonding of such components was performed as follows:

1. The base member 1 was attached to the vacuum plate holder of top plate 54 of the bonding apparatus of Fig. 5 and held by vacuum with the information storage layer pointing downwards.
2. The pressure-sensitive adhesive layer 4 (after removal of one release liner) was put on the vacuum plate holder 53 of bottom plate 59 with the remaining release liner facing downwards, and centred.
3. The main vacuum chamber 56 was closed.
4. The main chamber 56 was evacuated until a vacuum of 0.08 mbar was reached.
5. The bottom plate 59 was ventilated to raise it thus bonding the pressure-sensitive adhesive layer 4 to the information storage layer 3 of the base member 1.
6. The vacuum plate holder 53 of the bottom plate 59 was evacuated and the bottom plate 59 was lowered.
7. The main vacuum chamber 56 was ventilated and then opened.
8. The bonded construction ( base member 1 / information storage layer 3 / pressure-sensitive adhesive layer 4 / release liner ) remained attached to the top plate 54 held by its vacuum plate holder.
9. The release liner was removed from the pressure-sensitive adhesive layer 4.
10. The die-cut laminate of the light-transmissive cover layer 5 and the protective film 7 was put on the vacuum

plate holder 53 of bottom plate 59 with the releasable protective film facing downwards, and centered.

11. The main vacuum chamber 56 was closed.
12. The main chamber 56 was evacuated until a vacuum of 0.08 mbar was reached.
13. The bottom plate was ventilated and thereby raised, and the light-transmissive cover film 5 was adhered to the pressure-sensitive adhesive layer 4, thus forming an optical storage medium.
14. The vacuum plate holder of the top plate 54 was evacuated.
15. The bottom plate 59 was lowered.
17. The main vacuum chamber 56 was ventilated.
18. The main chamber 56 was opened.

To evaluate the performance of the finished optical storage medium, the releasable protective film was removed. The optical storage medium obtained exhibited advantageous optical properties, a low thickness variation, low jitter values and a high transmission with respect to linearly polarized light.

*Comparative Example 1*

APEC 9331 (Bayer AG), a polycarbonate polymer comprising 90% by weight bisphenol A and 10% by weight 1,1-bis(4-hydroxyphenyl)-3,3,5-trimethyl cyclohexane (TMC), was dissolved in methylene chloride and cast onto a smooth stainless steel belt and then dried down to 15% residual solvent. The film was removed from the belt and passed through a forced air oven (ca. 80-100° C) until the residual solvent in the film was less than 1% by weight.

The resulting light-transmissive cover film had a thickness of 77.0 microns. The film was obtained from Lofo High Tech Film GmbH, Weil am Rhein, Germany.

The light-transmissive cover film was evaluated according to the Test methods given above. Results are summarized in Table 1.

The cast polycarbonate film was then used as a protective cover film for an optical storage medium as in Example 1.

Table 1

| Ex. | Film Thickness, microns +/- | Vertical Birefringence | In-plane retardation, nm +/- | Microroug h-ness, nm | Wave-like roughness, nm |
|---|---|---|---|---|---|
| 1 Extruded PC | 81.3, +/- 2 | 0.00029 | - 4 , +/- 8 | 40 | 200 |
| C1 Solvent cast PC | 77.0, +/- 0.6 | 0.00066 | - 1 , +/- 9 | 60 | 400 |

## Claims

1. Optical storage medium from which information can be read out and/or into which information can be recorded with a light beam (6), said optical storage medium comprising one or more base members (1) bearing on the side of the base members (1) on which the light beam (6) is incident, one or more information storage layers (3), at least one light-transmissive cover film (5) and one or more light-transmissive adhesive layers (4) bonding said cover films (5) to each other, to the surface (2) of the base members (1) on which the light beam (6) is incident and/or to one or more information storage layers (3), said cover films (5) exhibiting a vertical birefringence of less than 0.001 at 20 °C at least at the wavelength or wavelength spectrum, respectively, of said light beam (6) and at least one of said cover films being extruded.

2. Optical storage medium according to claim 1 wherein said adhesive layer (4) is a pressure-sensitive adhesive film.

3. Optical storage medium according to any of claims 1 and 2 wherein said cover film or films (5) exhibit an in-plane retardation of less than ± 30 nm at 20 °C at least at the wavelength or wavelength spectrum, respectively, of said light beam (6).

4. Optical storage medium according to claims 1-3, comprising one base member (1) the surface (2) of which bearing

a structure of pits on which an information storage layer (3) is formed.

**5.** Optical storage medium according to claims 1-4 comprising one light-transmissive cover film (5) bonded to the information storage layer (3) on the surface (2) of the base member (1) by means of a light-transmissive adhesive layer (4).

**6.** Optical storage medium according to any of claims 1 to 5 wherein the thickness of the light-transmissive cover film or films (5) is from 10 μm to 200 μm.

**7.** Optical storage medium according to claim 2 wherein the thickness of the light-transmissive pressure-sensitive adhesive layer or layers (4) is from 5 μm to 100 μm.

**8.** Optical storage medium according to any of claims 1 - 7 wherein the variation of the thickness of each light-transmissive cover film (5) and/or the variation of the thickness of the optical recording medium introduced by each light-transmissive cover film (5) as measured across an arbitrarily selected cross-section of the optical recording medium over its entire extension is not more that about ± 3 μm.

**9.** Optical storage medium according to any of claims 1 - 8 wherein the variation of the thickness of each light-transmissive adhesive layer (4) and/or the variation of the thickness of the optical recording medium introduced by each light-transmissive adhesive layer (4) as measured across an arbitrarily selected cross-section of the optical recording medium over its entire extension is not more than about ± 3 μm.

**10.** Optical storage medium according to any of claims 1 - 9 comprising one light-transmissive cover film (5) and one light-transmissive adhesive layer (4) wherein the sum of the variation of the thickness of the light-transmissive cover film (5) or the variation of the thickness of the optical medium introduced by the light-transmissive cover film (5), respectively, and the variation of the thickness of the light-transmissive adhesive layer (4) or the variation of the thickness of the optical recording medium introduced by the adhesive layer (4), respectively, is not more than ± 5 μm, whereby such sum is measured across an arbitrarily selected cross-section of the optical recording medium over its entire extension.

**11.** Method of preparing an optical recording medium according to any of claims 1 - 10 comprising

(1) providing at least one base member (1) having a surface (2) on which the light beam (6) is incident, said surface optionally comprising a structure of pits bearing an information storage layer (3),
(2) providing a multilayer film (12) comprising in the order given a releasable protective film (7), a light-transmissive cover film (5) the inner surface of which optionally comprising a structure of pits bearing an information storage layer (3), a light-transmissive pressure-sensitive adhesive layer (4) and a release liner (8), optionally further comprising between the light-transmissive cover film (5) and the pressure-sensitive adhesive film one or more further light-transmissive cover films (5') bonded to each other by means of one or more further light-transmissive adhesive layers (4'), wherein said cover films (5, 5') exhibit a vertical birefringence of less than 0.001 at 20 °C at least at the wavelength or wavelength spectrum, respectively, of said light beam (6) and wherein at least one of said cover films (5, 5') is extruded,
(3) removing said release liner (8) and
(4) laminating the multilayer film (12) to the surface (2) of the information storage layer (3) on the surface (2) of the base member (1).

**12.** Use of one or more extruded light-transmissive cover films (5) in an optical storage medium, at least one of said cover film exhibiting a vertical birefringence of less than 0.001 at 20 °C at least at the wavelength or wavelength spectrum, respectively, of a light beam (6) used to read information out of and/or into said optical storage medium, said optical storage medium comprising one or more base members (1) bearing on the side of the base members (1) on which the light beam (6) is incident, one or more information storage layers (3), at least one light-transmissive cover film (5) and one or more light-transmissive adhesive layers (4) bonding said cover films (5) to each other, to the surface (2) of the base members (1) on which the light beam (6) is incident and/or to one or more information storage layers (3).

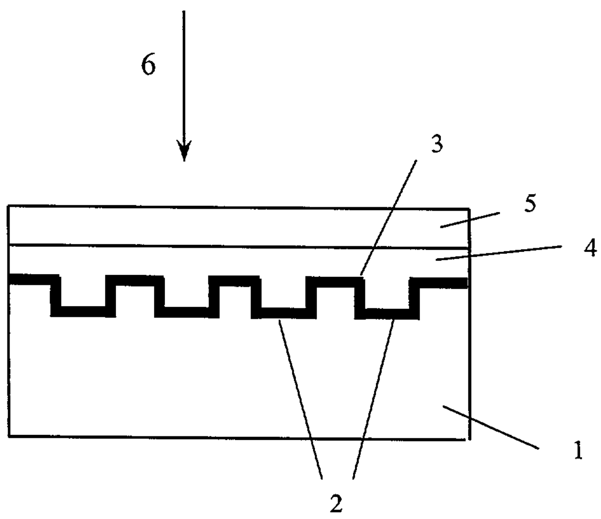


*Fig. 1a*

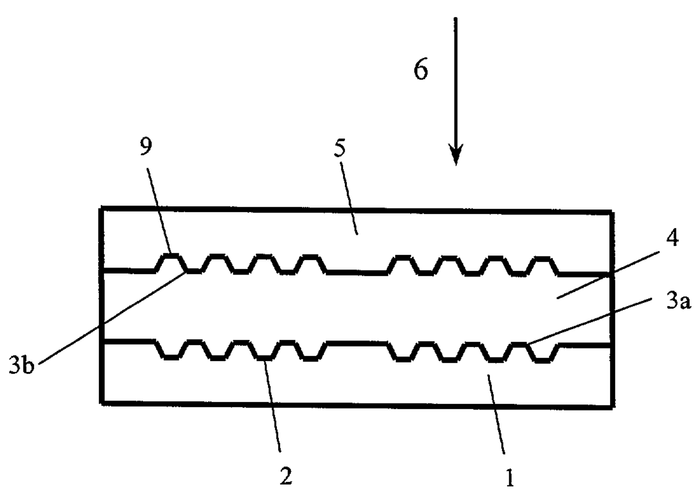


*Fig. 1b*

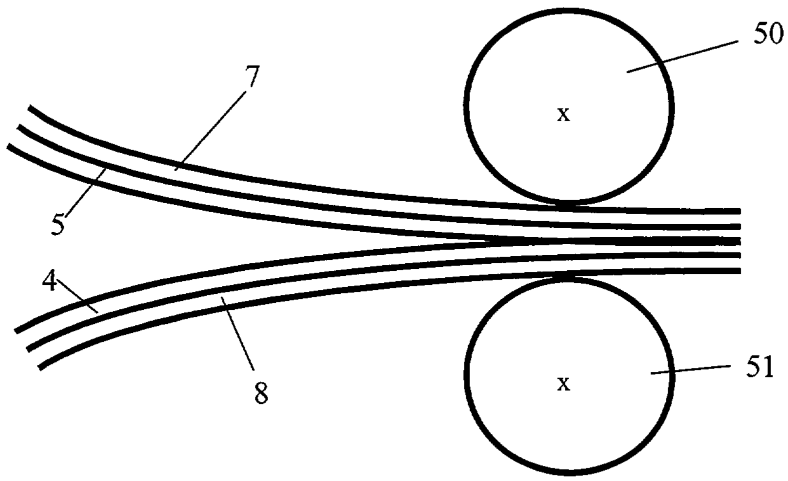


*Fig. 2*

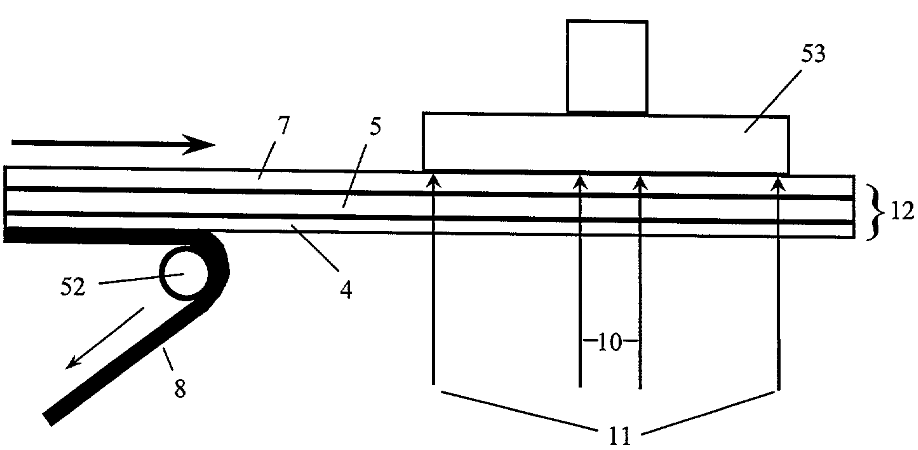


*Fig. 3*

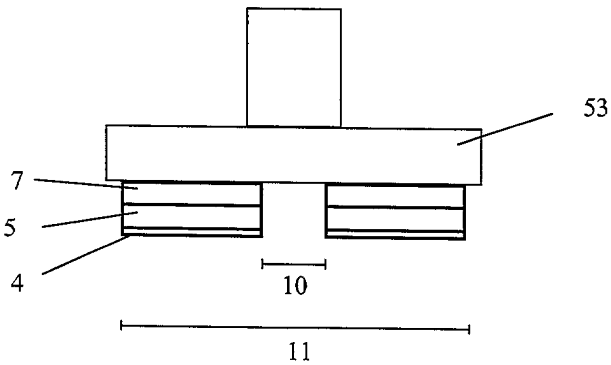


Fig. 4

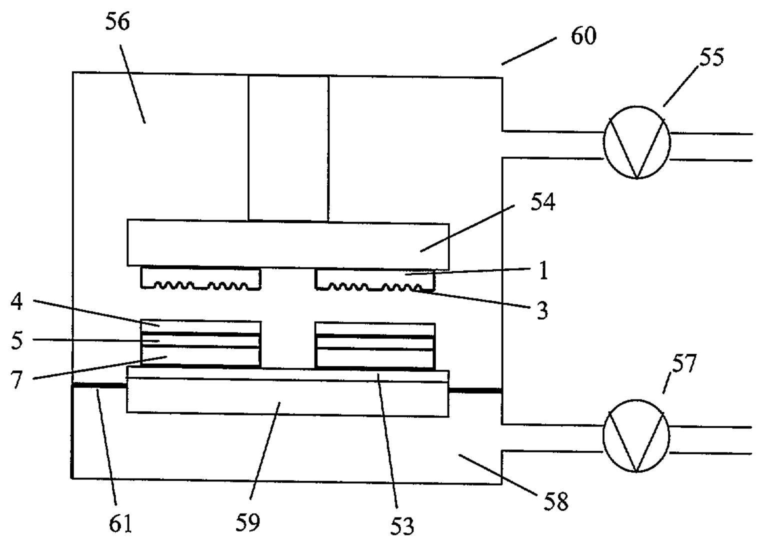


Fig. 5

European Patent Office

# EUROPEAN SEARCH REPORT

Application Number
EP 00 12 3082

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br>A | EP 0 999 033 A (ROHM & HAAS)<br>10 May 2000 (2000-05-10)<br>* the whole document *<br>--- | 1<br><br><br>11,12 | G11B7/24<br>B29C47/88 |
| A | EP 0 345 360 A (FUJIMORI KOGYO CO)<br>13 December 1989 (1989-12-13)<br>* page 5, line 11-13 *<br>* page 3, line 1,2; claim 1; figure 1 *<br>* page 2, column 24 *<br>--- | 1,11,12 | |
| A | US 4 551 733 A (CORNET JEAN ET AL)<br>5 November 1985 (1985-11-05)<br>* column 3, line 14-30; claim 1; figure 1 *<br>--- | 1 | |
| A | PATENT ABSTRACTS OF JAPAN<br>vol. 012, no. 062 (P-670),<br>25 February 1988 (1988-02-25)<br>& JP 62 204450 A (FUJITSU LTD),<br>9 September 1987 (1987-09-09)<br>* abstract *<br>--- | 1 | TECHNICAL FIELDS SEARCHED (Int.Cl.7)<br>G11B<br>B29C |
| A | EP 0 855 703 A (KITANO ENGINEERING CO LTD)<br>29 July 1998 (1998-07-29)<br>* claim 1; figure 1 *<br>--- | 11 | |
| A | EP 0 384 041 A (AGFA GEVAERT NV)<br>29 August 1990 (1990-08-29)<br>* claim 1; figure 1 *<br>----- | 11 | |

The present search report has been drawn up for all claims

| Place of search | Date of completion of the search | Examiner |
|---|---|---|
| BERLIN | 26 April 2001 | Bernas, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 12 3082

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2001

| Patent document cited in search report | Publication date | Patent family member(s) | Publication date |
|---|---|---|---|
| EP 0999033 A | 10-05-2000 | US 6183829 B | 06-02-2001 |
| | | CN 1253068 A | 17-05-2000 |
| | | JP 2000296544 A | 24-10-2000 |
| EP 0345360 A | 13-12-1989 | JP 1162250 A | 26-06-1989 |
| | | JP 2545253 B | 16-10-1996 |
| | | DE 3855235 D | 30-05-1996 |
| | | DE 3855235 T | 05-09-1996 |
| | | WO 8906036 A | 29-06-1989 |
| | | US 5051314 A | 24-09-1991 |
| US 4551733 A | 05-11-1985 | FR 2524186 A | 30-09-1983 |
| | | CA 1193364 A | 10-09-1985 |
| | | DE 3376904 D | 07-07-1988 |
| | | EP 0089874 A | 28-09-1983 |
| | | JP 2519025 B | 31-07-1996 |
| | | JP 58171735 A | 08-10-1983 |
| JP 62204450 A | 09-09-1987 | NONE | |
| EP 0855703 A | 29-07-1998 | JP 10208319 A | 07-08-1998 |
| | | US 5980677 A | 09-11-1999 |
| EP 0384041 A | 29-08-1990 | DE 68916530 D | 04-08-1994 |
| | | DE 68916530 T | 24-11-1994 |
| | | JP 2266979 A | 31-10-1990 |
| | | JP 2899711 B | 02-06-1999 |
| | | US 5147490 A | 15-09-1992 |

EPO FORM P0459

For more details about this annex : see Official Journal of the European Patent Office, No. 12/82